# EUROPÄISCHE PATENTSCHRIFT

(11) **EP 0 709 661 B1**
(45) Veröffentlichungstag und Bekanntmachung des Hinweises auf die Patenterteilung: **22.03.2000**
(21) Anmeldenummer: 95890185.2
(22) Anmeldetag: 12.10.1995
(51) Int. Cl.: G01L 5/22, G01L 5/00

(54) **Bolzen zur Messung der Weichenstellkraft mit asymmetrischer Krafteinleitung**
Switching force measuring bolt with asymmetric force introduction
Boulon de mesure de la force de manoeuvre d'aiguillage avec application asymétrique de la force

(30) Priorität: 31.10.1994 AT 38394 U
(43) Veröffentlichungstag der Anmeldung: 01.05.1996
(73) Patentinhaber: VAE Aktiengesellschaft, 1010 Wien (AT)
(72) Erfinder: Durchschlag, Gerald, A-8740 Zeltweg (AT)
(74) Vertreter: Haffner, Thomas M., Dr.

(56) Entgegenhaltungen:
- WO-A-94/27127
- PATENT ABSTRACTS OF JAPAN vol. 006, no. 108 (P-123), 18.Juni 1982 & JP-A-57 040623 (JAPANESE NATIONAL RAILWAYS), 6.März 1982,

## Beschreibung

Die Erfindung bezieht sich auf eine Einrichtung zur Messung der Weichenstellkraft bei Schienenweichen mit einem Sensor und einem mit dem Sensor verbundenen als Verformungskörper ausgebildeten Meßbolzen, welcher in ein von einem Gabelstück und einer im Gabelstück um eine Gelenkachse schwenkbaren Stange gebildeten Gelenk im Weichenantrieb einsetzbar ist, wobei der Sensor als elektromechanischer Sensor ausgebildet ist und außerhalb des Kraftangriffes auf den Meßbolzen in einem mit dem Meßbolzen verbundenen Kopf angeordnet ist.

Eine Einrichtung der eingangs genannten Art ist in der nachveröffentlichten WO-A-94 27127 beschrieben. Der beschriebene Weichenstellkraftmesser besteht aus einem geschlitzten Stahlkörper als Verformungskörper, der einen Sensor trägt und dient zum Messen der zwischen dem Weichenantrieb und der Weiche auftretenden Kräfte, wobei es gleichgültig ist, ob diese Kräfte vom Weichenantrieb auf die Weichenzungen oder als Restkraft bei Federschienenzungen oder als Auffahrkraft gegen die Festhaltekraft oder gegen den Auffahrwiderstand des Weichenantriebes wirken. Der Meßbolzen wird zu diesem Zwecke anstelle eines Weichenverbindungsbolzens in ein Kreuzgelenk bzw. in ein zweiachsiges Gelenk eingesetzt, wobei durch die Schlitzung des Stahlkörpers Biegebalken ausgebildet werden. Bei der beschriebenen Einrichtung sind an der Außenseite ringförmige Verdickungen vorgesehen, welche jeweils dem Angriff der Kräfte dienen. Die Ausbildung bestand darin, daß der Sensor als elektromechanischer Sensor ausgebildet ist und außerhalb des Kraftangriffes auf den Meßbolzen in einem mit dem Meßbolzen verbundenen Kopf angeordnet ist. Dadurch, daß innerhalb des Meßbolzens keine Teile des Meßsensors angeordnet waren, welche auf Grund der Länge des Meßbolzens Schwingungen ausgesetzt werden, sondern elektromechanische Sensoren außerhalb des Kraftangriffes im Kopf des Meßbolzens angeordnet wurden, wurde eine Ausbildung geschaffen, welche einen entsprechend breiten Kopf aufweisen könnte, welcher das Einsetzen und Entnehmen des Bolzens aus der jeweiligen Meßposition erleichtert. In den Kopf eines derartigen Meßbolzens konnte ein entsprechend mechanisch geschützter Meßsensor, wie er beispielsweise der US-PS 4 530 245 entnommen werden kann, in einfacher Weise eingebaut werden. Um auch bei dickwandigen Ausbildungen des Bolzenkopfes und bei entsprechenden stabilen Edelstahlausbildungen des Meßbolzens und des Kopfes eine entsprechend gute Verformbarkeit und damit ein entsprechend großes Signal sicherzustellen, wurde die ältere Ausbildung so getroffen, daß der Kopf für die Aufnahme des Meßsensors quer zur Achse des Bolzens geschlitzt ausgebildet ist.

In besonders vorteilhafter Weise konnte auch bei massiver und damit stoß- und sturzgesicherter Ausbildung des Meßbolzens mit dem Meßkopf die Ausbildung so getroffen werden, daß der Kopf zwei in axialer Richtung versetzte Schlitze aufweist, wodurch trotz der stabilen und stoßunempfindlichen Ausbildung eine Messung sichergestellt ist.

Eine derartig stoßsichere und einfache Ausbildung des Meßbolzens kann mit Vorteil auch im rauhen Bahnbetrieb unmittelbar durch Anschluß an einen PC bzw. Laptop zu einer komplexen Auswerteeinrichtung zusammengeschaltet werden, wobei mit Vorteil die Ausbildung so getroffen wurde, daß der Sensor über einen Signalverstärker und einen Analog/Digitalwandler mit einer Standardschnittstelle, insbesondere einer seriellen Schnittstelle mit einem Rechner, mit einem Speicher und einer Anzeige, verbunden ist.

Die Erfindung zielt nun darauf ab, diese Ausbildung dahingehend weiterzubilden, daß auch bei geringen Stellkräften und entsprechend hoher Stabilität des Meßbolzens eine entsprechend empfindliche Messung mit hoher Reproduzierbarkeit gelingt. Zur Lösung dieser Aufgabe, schlägt die Erfindung eine Einrichtung zur Messung der Weichenstellkraft bei Schienenweichen mit einem Sensor und einem mit dem Sensor verbundenen als Verformungskörper ausgebildeten Meßbolzen, welcher in ein von einem Gabelstück und einer im Gabelstück um eine Gelenkachse schwenkbaren Stange gebildeten Gelenk im Weichenantrieb einsetzbar ist, wobei der Sensor als elektromechanischer Sensor ausgebildet ist und außerhalb des Kraftangriffes auf den Meßbolzen in einem mit dem Meßbolzen verbundenen Kopf angeordnet ist, wobei der Meßbolzen an seinem Mantel drei sich in Umfangsrichtung erstreckende ringförmige Erhebungen für die Krafteinleitung aufweist, welche außerhalb der von der Gelenkachse durchsetzten Mittelebene des Gelenkes in unterschiedlichem axialen Abstand voneinander angeordnet sind und mit dem Gabelstück bzw. der Stange des Gelenkes zusammenwirken, vor. Dadurch daß die ringförmigen Erhebungen bzw. Rippen in der erfindungsgemäß vorgeschlagenen Weise in axialer Richtung beabstandet ausgeführt werden, gelingt es die Stellkräfte soweit exzentrisch in den Meßbolzen einzuleiten, daß eine entsprechend dem Hebelgesetz sich ergebende Verstärkung der mechanischen Verformung und damit des Meßsignales gelingt. Insgesamt wird durch die außermittige Kraftaufnahme auch bei überaus kleinen Stellkräften bereits ein präziser Meßwert erzielt und es wird somit die Empfindlichkeit der bekannten Einrichtung wesentlich gesteigert, ohne die Betriebssicherheit und die Stabilität des Meßbolzens zu beeinträchtigen.

Die erfindungsgemäße Ausbildung ist mit Vorteil so weitergebildet, daß ein axialer Abstand der ringförmigen Erhebungen zueinander größer ist, als die Breite der einen Teil des Gelenkes bildenden Kupplungsstange in Richtung der Schwenkachse des Gelenkes gemessen, womit sichergestellt wird, daß der maximal denkbare Abstand für eine außermittige Krafteinleitung ausgenützt werden kann und eine entsprechende mechanische Meßsignalverstärkung erzielt werden kann.

Das gewünschte Maß an außermittiger Krafteinleitung zum Zwecke der mechanischen Kraftverstärkung wird mit Vorteil dadurch sichergestellt, daß die dem Sensor bzw. dem Kopf benachbarten ringförmigen Erhebungen in einem axialen Abstand zueinander angeordnet sind, welcher kleiner ist als der axiale Abstand zwischen der mittleren und der dem Kopf abgewandten dritten ringförmigen Erhebung, wobei vorteilhaft der Sensor im Kopf unmittelbar benachbart zur ersten Erhebung angeordnet ist. Dadurch ist sichergestellt, daß die Krafteinleitung der ersten Erhebung eine sichere Verformung des Meßbolzens der Einspannstelle des Sensors ergibt. Darüberhinaus kann die Ausbildung so getroffen werden, daß der Meßbolzen eine axiale Bohrung für eine Kabeldurchführung aufweist. Insbesondere eine derartige axiale Bohrung für eine Kabeldurchführung erlaubt es nun die Kabeldurchführung geschützt nach unten zu verlegen, und an das Ende des Meßbolzens einen einfachen Stecker für weitergehende Kabelverbindungen anzuordnen. Die mechanisch wesentlich weniger widerstandsfähigen Kabelverbindungen und Stecker können auf diese Weise geschützt an der Unterseite angeordnet werden und es gelingt eine weitestgehend vollständige Kapselung des Meßsensors an der freiliegenden Ober- bzw. Außenseite, wodurch die Betriebssicherheit erhöht werden kann. Die Ausbildung ist hiebei mit Vorteil so getroffen, daß eine Verdrehsicherung für den Meßbolzen als den Sensor außen dichtend umgreifender Deckel ausgebildet ist.

Die Erfindung wird nachfolgend an Hand eines Vergleiches der bekannten Ausbildung mit der erfindungsgemäßen Weiterbildung näher erläutert. In dieser zeigen: Fig.1 eine schematische Teilansicht durch ein Gelenk mit eingesetztem Meßbolzen nach dem Stand der Technik; Fig.2 eine perspektivische Seitenansicht des bekannten Meßbolzens und Fig.3 einen teilweisen Schnitt durch die erfindungsgemäße Ausbildung.

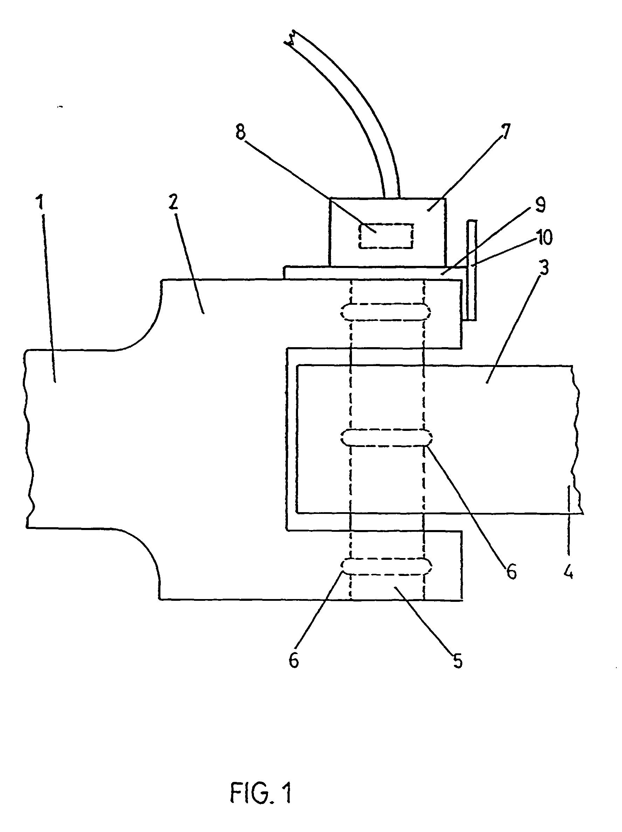

In Fig.1 ist das Ende einer Verbindungsstange 1 mit einem Gabelstück 2 ersichtlich, in welches ein Lagerauge einer Kupplungsstange 4 eintaucht. Die Verbindung zwischen dem Lagerauge 3 und dem Gabelstück 2 erfolgt mittels eines Meßbolzens 5, welcher an seinem Umfang schematisch angedeutete rippenförmige Erhebungen 6 aufweist, welche jeweils kraftschlüssig in den entsprechenden Ausnehmungen des Gabelstückes 2 bzw. des Lagerauges 3 angreifen. Am freien Ende des Bolzens 5 ist ein Kopf 7 angeordnet, in welchem ein elektromechanischer Sensor 8 angeordnet ist. Der Kopf 7 weist an seinem der Außenseite der Gabel 2 zugewandten Ende eine Anschlagschulter für einen plattenförmigen Steg 9 eines Zwischenstückes 10 auf und ist am Zwischenstück 10 entsprechend drehlagensicher gehalten. Das Zwischenstück 10 umgreift hiebei mit quer zum plattenförmigen Steg 9 verlaufenden Teilen die Klaue bzw. das Gabelstück 2.

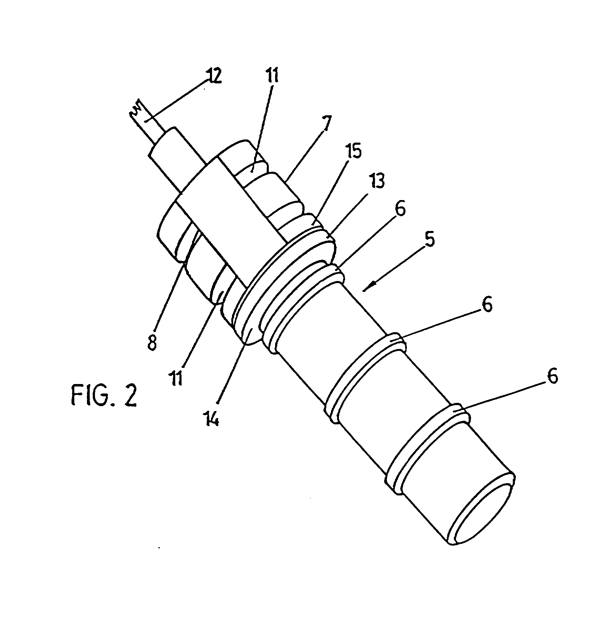

In Fig.2 ist der Meßbolzen 5 im Detail nochmals ersichtlich. An der Außenseite des in das Lagerauge eintauchenden und das Gabelstück 2 durchsetzenden Meßbolzen sind wieder ringförmige Erhebungen 6 vorgesehen, welche der Krafteinleitung dienen. Der verbreiterte Kopf 7 ist mit Schlitzen 11 ausgebildet und enthält in seinem Hohlraum den elektromechanischen Meßsensor 8. Die elektrische Zuleitung ist entsprechend zuggesichert mit 12 angedeutet.

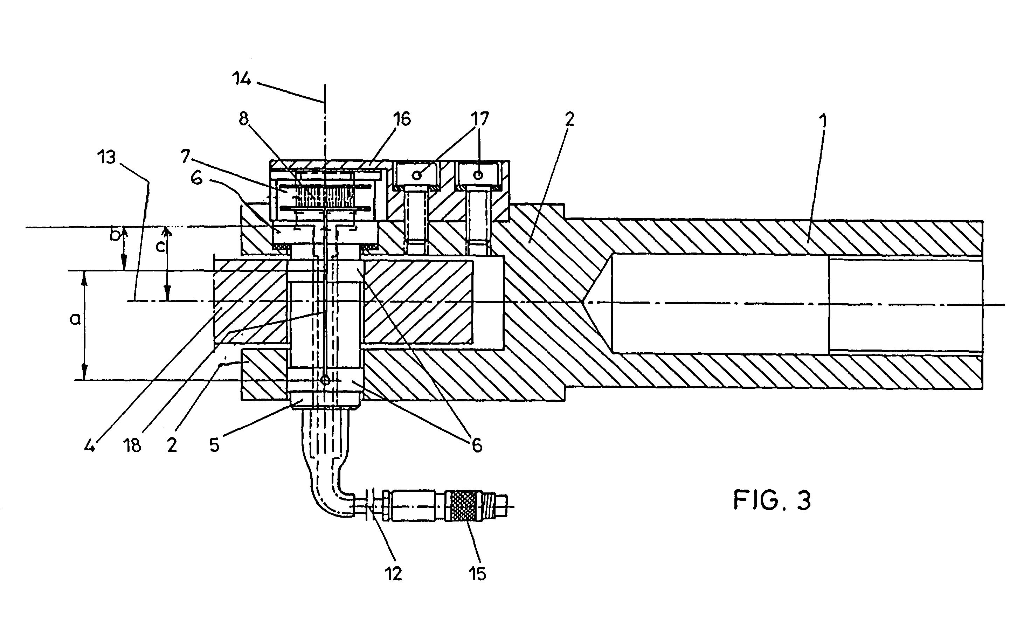

In Fig.3 ist nun die erfindungsgemäße Ausbildung ersichtlich, wobei die ringförmigen Erhebungen bzw. Rippen 6 in einem Abstand a und b voneinander angeordnet sind und die drei ringförmigen Erhebungen 6 jeweils außerhalb der Längsmittelebene, welche die Achse 13 enthält, des Gelenkes angeordnet sind, welche von der Schwenkachse 14 des Gelenkes durchsetzt wird. Der Meßsensor 8 ist der ersten ringförmigen Erhebung 6 benachbart im Kopf 7 angeordnet. Der Abstand c der ersten, dem Sensor 8 benachbarten ringförmigen Erhebung 6 von der Achse 13 ist hierbei ersichtlich größer als der Abstand b, zwischen den dem Meßkopf 7 benachbarten ersten beiden ringförmigen Erhebungen 6. Die mittlere ringförmige Erhebung 6 des Meßbolzens 5, die sich in der Durchbrechung der Kupplungsstange 4 befindet, nimmt Kräfte außermittig auf, wohingegen bei den bekannten Ausbildungen die Kraftaufnahme in der Längsmittelebene 13 erfolgt. Diese Verlagerung der mittleren ringförmigen Erhebung 6 in Richtung zum Sensor 8 aus der Längsmittelebene 13 heraus in Richtung zur Meßdose 8 führt zu der entsprechenden mechanischen Verstärkung der Verformung und damit der Verstärkung des erhältlichen elektrischen Meßwertes.

Das Kabel 12 ist bei der Aubildung nach Fig.3 durch eine axiale Bohrung des Meßbolzens 5 hindurchgeführt und endet in einen Stecker 15, welcher geschützt an der Unterseite angeordnet werden kann.

Um die Außenseite besser gegen Umwelteinflüsse zu schützen und zu kapseln, ist eine Abdeckung 16 vorgesehen, welche mit Schrauben 17 an dem Gabelstück 2 festgelegt ist. Diese Abdeckung 16 umgreift den Kopf 7 und damit die Meßdose 8 dichtend, wobei gleichzeitig eine entsprechende Verdrehsicherung hier erfolgen kann. Der sich in Längsrichtung des Meßbolzens 5 erstreckende Schlitz ist mit 18 angedeutet.

## Patentansprüche

1. Einrichtung zur Messung der Weichenstellkraft bei Schienenweichen mit einem Sensor (8) und einem mit dem Sensor (8) verbundenen als Verformungskörper ausgebildeten Meßbolzen (5), welcher in ein von einem Gabelstück und einer im Gabelstück um eine Gelenkachse schwenkbaren Stange gebildeten Gelenk im Weichenantrieb einsetzbar ist, wobei der Sensor (8) als elektromechanischer Sensor (8) ausgebildet ist und außerhalb des Kraftangriffes auf den Meßbolzen (5) in einem mit dem Meßbolzen (5) verbundenen Kopf (7) angeordnet ist, wobei der Meßbolzen (5) an seinem Mantel drei sich in Umfangsrichtung erstreckende ringförmige Erhebungen (6) für die Krafteinleitung aufweist, welche außerhalb der von der Gelenkachse (14) durchsetzten Mittelebene (13) des Gelenkes in unterschiedlichem axialen Abstand (a,b) voneinander angeordnet sind und mit dem Gabelstück (2) bzw. der Stange (4) des Gelenkes zusammenwirken.

2. Einrichtung nach Anspruch 1, dadurch gekennzeichnet, daß ein axialer Abstand (a) der ringförmigen Erhebungen (6) zueinander größer ist, als die Breite der die schwenkbare Stange des Gelenkes bildenden Kupplungsstange (4) in Richtung der Schwenkachse (14) des Gelenkes gemessen.

3. Einrichtung nach Anspruch 1 oder 2, dadurch gekennzeichnet, daß die dem Sensor (8) bzw. dem Kopf (7) benachbarten ringförmigen Erhebungen (6) in einem axialen Mittenabstand (b) zueinander angeordnet sind, welcher kleiner ist als der axiale Mittenabstand (a) zwischen der mittleren und der dem Kopf abgewandten dritten ringförmigen Erhebung (6).

4. Einrichtung nach Anspruch 1, 2 oder 3, dadurch gekennzeichnet, daß der Sensor (8) im Kopf (7) unmittelbar benachbart zur ersten ringförmigen Erhebung (6) angeordnet ist.

5. Einrichtung nach Anspruch 1 bis 4, dadurch gekennzeichnet, daß der Meßbolzen (5) eine axiale Bohrung (18) für eine Kabeldurchführung aufweist.

6. Einrichtung nach Anspruch 1 bis 5, dadurch gekennzeichnet, daß eine Verdrehsicherung für den Meßbolzen (5) als den Sensor außen dichtend umgreifender Deckel (16) ausgebildet ist.

## Claims

1. A device for measuring the switching force in rail switches, including a sensor (8) and a measuring pin (5) connected with the sensor (8), which measuring pin is designed as a deformation body and is insertable into a joint provided in the switch mechanism and formed by a fork-shaped piece and a rod pivotable about an articulation axis within the fork-shaped piece, wherein the sensor (8) is configured as an electromechanical sensor (8) and arranged beyond the application of force on the measuring pin (5) in a head (7) connected with the measuring pin (5), wherein the measuring pin (5) on its shell comprises three circumferentially extending annular elevations (6) for the introduction of force, which are arranged at different axial distances (a, b) from one another outside the central plane (3) of the joint through which the articulation axis (14) passes and respectively cooperate with the fork-shaped piece (2) and the rod (4) of the joint.

2. A device according to claim 1, characterized in that a mutual axial distance (a) of the annular elevations (6) is larger than the width of the coupling rod (4) forming the pivotable rod of the joint, measured in the direction of the pivot axis (14) of the joint.

3. A device according to claim 1 or 2, characterized in that the annular elevations (6) provided in the vicinity of the sensor (8) or head (7) are arranged at a mutual axial central distance (b) that is smaller than the axial central distance (a) between the central annular elevation (6) and the third annular elevation (6), which faces away from the head.

4. A device according to claim 1, 2 or 3, characterized in that the sensor (8) is arranged in the head (7) immediately adjacent the first annular elevation (6).

5. A device according to claims 1 to 4, characterized in that the measuring pin (5) comprises an axial bore (18) for passing a cable therethrough.

6. A device according to claims 1 to 5, characterized in that a means securing the measuring pin (5) against rotation is designed as a lid (16) tightly encompassing the sensor externally.

## Revendications

1. Dispositif pour la mesure de la force de manoeuvre d'aiguillage dans des aiguillages de voies, comprenant un capteur (8) et une tige de mesure (5) reliée au capteur (8) et constituée par un corps de déformation, qui peut être intégrée dans une articulation de la commande de l'aiguille formée d'une fourchette et d'une barre qui peut osciller dans la fourchette autour d'un axe d'articulation, dans lequel le capteur (8) est constitué par un capteur électromécanique (8) et est disposé dans une tête (7) reliée à la tige de mesure (5), en dehors de la zone d'application de la force à la tige de mesure (5), et dans lequel la tige de mesure (5) présente, sur sa surface latérale, trois protubérances annulaires (6) destinées à l'application de la force, qui s'étendent dans la direction circonférentielle et qui sont disposées en dehors du plan médian (13) de l'articulation traversé par l'axe d'articulation (14), à différents écartements axiaux mutuels (a, b) et qui coopèrent respectivement avec la fourchette (2) et avec la barre (4) de l'articulation.

2. Dispositif selon la revendication 1, caractérisé en ce que l'écartement axial mutuel (a) entre les protubérances annulaires (6) est plus grand que la largeur de la barre d'accouplement (4) qui forme la barre oscillante de l'articulation, mesurée selon l'axe d'oscillation (14) de l'articulation.

3. Dispositif selon la revendication 1 ou 2, caractérisé en ce que les protubérances annulaires (6) qui sont respectivement adjacentes au capteur (8) et à la tête (7) sont disposées l'une par rapport à l'autre à un écartement axial entre centres (b) qui est plus petit que l'écartement axial entre centres (a) entre la protubérance annulaire centrale (6) et la troisième protubérance annulaire qui est à l'opposé de la tête.

4. Dispositif selon la revendication 1, 2 ou 3, caractérisé en ce que le capteur (8) est disposé dans la tête (7) à proximité immédiate de la première protubérance annulaire (6).

5. Dispositif selon la revendication 1 à 4, caractérisé en ce que la tige de mesure (5) présente un perçage axial (18) pour le passage d'un câble.

6. Dispositif selon la revendication 1 à 5, caractérisé en ce qu'un blocage de rotation prévu pour la tige de mesure (5) est constitué par un couvercle (16) qui emboîte extérieurement le capteur en formant un joint étanche.
